# EUROPEAN PATENT SPECIFICATION

(11) **EP 4 343 951 B1**
(45) Date of publication and mention of the grant of the patent: **21.10.2026**
(21) Application number: 22826582.3
(22) Date of filing: 27.10.2022
(51) Int. Cl.: H01M 50/502

(54) **CURRENT COLLECTOR DISC AND BATTERY**
STROMSAMMELPLATTE UND BATTERIE
DISQUE COLLECTEUR DE COURANT ET BATTERIE

(30) Priority: 11.08.2022 CN 202222108617 U
(43) Date of publication of application: 27.03.2024
(73) Proprietor: Eve Power Co., Ltd., Jingmen, Hubei 448000 (CN)
(72) Inventor: LI, Shangyi, Jingmen Hubei 448000 (CN); CHEN, Wen, Jingmen Hubei 448000 (CN); HUANG, Liming, Jingmen Hubei 448000 (CN)
(74) Representative: Murgitroyd & Company
(86) International application number: PCT/CN2022/127922
(87) International publication number: WO 2024/031841

(56) References cited:
- CN-A- 114 628 767
- CN-A- 114 628 767
- CN-A- 114 628 866
- CN-A- 114 628 866
- CN-U- 208 284 546
- CN-U- 215 578 674
- CN-U- 215 578 675
- CN-U- 215 816 074
- CN-U- 216 720 227
- CN-U- 216 720 227
- CN-U- 217 062 428
- JP-A- 2004 139 777

## Description

### CROSS-REFERENCE TO RELATED APPLICATION

This application claims priority to Chinese Patent Application No. 202222108617.8, filed on August 11, 2022.

### TECHNICAL FIELD

The present application relates to the field of batteries, for example, to a current collecting plate and a battery.

### BACKGROUND

At present, in a production and manufacturing process of a battery, a collecting plate is generally arranged on an end face of a roll core, then an end face of the collecting plate is welded with the roll core into a whole, and another end face of the collecting plate is also connected with a positive pole by welding to form a current path.

Usually, the collecting plate is welded with the roll core and the pole respectively to ensure a connection strength between the roll core and the pole while preventing the roll core from shaking during use. However, an internal pressure of the battery is subjected to be too high during use, and at this time, due to a tight fixation between the current collecting plate and a positive pole, an inner portion of the roll core is pulled out, and solder joints between the roll core and the current collecting plate are subjected to disconnect under an action of the internal pressure. Thus, a short circuit occurs because of an easy contact between a positive plate and a negative plate of the roll core. In addition, if the solder joints between the roll core and the current collecting plate cannot be disconnected and the internal pressure of the battery cannot be released, the battery may explode, resulting a great security risk.

Therefore, it is necessary to design a collection plate and a battery to solve the above problems.

CN114628866A provides a high energy density cylindrical battery and its assembling process. The battery includes a housing assembly, and an insulating member, a second current collecting plate, a winding core, a first current collecting plate and a cover plate are sequentially arranged in a housing of the housing assembly from bottom to top. The insulating member insulates the second current collecting plate from the housing. One side of the winding core is welded to the first current collecting plate, the other side of the winding core is welded to the second current collecting plate, the lower part of the second current collecting plate is integrally welded to a pole, the upper part of the pole is riveted to the bottom of the housing, and the lower part of the pole is provided with a cap. The upper part of the first current collecting plate is integrally welded with the housing and the cover plate.

### SUMMARY

The invention is defined by the claims and any other aspects, configurations or embodiments set forth herein not falling within the scope of the claims are for information only.

A current collecting plate is provided in the present application, which can release a pressure of a roll core and avoid a secondary short circuit when an internal pressure of a battery is too large and an inner portion of the roll core is pulled out, so as to protect the battery.

A battery is provided in the present application, by applying the current collecting plate above-mentioned, when an internal pressure of the battery is too large and an inner portion of a roll core is pulled out, a pressure is released by pulling out the roll core, and a second short circuit can be avoided, so as to protect the battery.

In a first aspect, a current collecting plate is provided in the present applicant, configured to connect with a roll core of a battery, wherein the current collecting plate comprises a main body part and a welding part, the welding part is bent relative to the main body part, and the current collecting plate is welded with the roll core through the welding part.

In an embodiment, the main body part is connected to the welding part at a position away from a center of the main body part, and a free end of the welding part extends towards the center of the main body part.

In an embodiment, a plurality of welding parts are provided, and the plurality of the welding parts are arranged at intervals and around a center of the main body part.

In an embodiment, a hollow groove is provided between the welding part and the main body part.

In a second aspect, a battery is provided in the present applicant, comprising a roll core a pole, and the current collecting plate above-mentioned, wherein the roll core is welded to the current collecting plate, and the pole is electrically connected with the roll core through the current collecting plate.

In an embodiment, the main body part comprises a central part, a first end of the pole is welded to the central part, and a second end of the pole is provided with a recess part configured for an avoidance for a laser head.

In an embodiment, an area S₁ of the central part ranges from 60 mm² to 85 mm², and a total area S₂ of the welding part (12) ranges from 650 mm² to 700 mm²; a relationship between the area S₁ of the central part and the total area S₂ of the welding part (12) satisfies with: 0.085 S₂ ≤ S₁ ≤ 0.13 S₂.

In an embodiment, a penetration layer is provided between an end face of the pole close to the current collecting plate and an inner bottom surface of the recess part, a cross section of the penetration layer is circular and a diameter of the cross section ranges from 3mm to 8mm, and a thickness d₁ of the penetration layer ranges from 0.8 mm to 1.5 mm;
a relationship between a thickness d₂ of the current collecting plate (1) and the thickness d₁ of the penetration layer satisfies with: 0.3 d₁ ≤ d₂ ≤ d₁.

In an embodiment, a center of the roll core is provided with a receiving hole, the receiving hole is configured to receive a support component, and the support component is configured to press the current collecting plate against the pole.

In an embodiment, the battery further comprises an insulating component and a housing, wherein the current collecting plate and the roll core are arranged in the housing, the insulating component comprises a first insulating component, and the first insulating component is sleeved on the pole and arranged between the housing and the current collecting plate.

In an embodiment, a gap is defined between the current collecting plate and the first insulating component.

### Beneficial effects according to the embodiments:

A current collecting plate is provided in the present application, the current collecting plate is welded with a roll core of a battery by arranging a welding part bent relative to a main body part, so as to protect the battery when an internal pressure of the battery is too high and an inner portion of the roll core is pulled out. It is conceivable that by arranging the welding part bent relative to the main body part, the roll core may pull the welding part to bend to deform during pulling out the inner portion of the roll core. Therefore, a solder joint between the welding part and the roll core is not disconnected during pulling out the inner portion of the roll core, thus avoiding a secondary short circuit, and at the same time, the inner portion of the roll core is pulled out to release a pressure, improving a safety.

A battery is provided in the present application, by providing the current collecting plate above-mentioned welded with a roll core of the battery, when an internal pressure of the battery is too high and an inner portion of the roll core is pulled out, a solder joint between the welding part and the roll core is not disconnected, thus avoiding a secondary short circuit, and at the same time, the inner portion of the roll core is pulled out to release a pressure, improving a safety.

### BRIEF DESCRIPTION OF THE DRAWINGS

FIG. 1 is a schematic diagram of a current collecting plate provided by an embodiment of the present application in a top view.
FIG. 2 is a schematic sectional diagram of a battery provided by an embodiment of the present application.
FIG. 3 is a schematic partial enlarged diagram of part A of FIG. 2.

### Reference numerals:

1, current collecting plate; 11, main body part; 12, welding part; 13, hollow groove; 14, linear solder joint; 15, central part;
2, roll core; 21, receiving hole; 3, pole; 31, recess part; 301, large end; 302, small end;
4, insulating component; 41, first insulating component; 42, second insulating component; 421, first part; 422, second part; 43, third insulating component; 44, fourth insulating component; 441, third part; 442, fourth part; 5, housing.

### DETAILED DESCRIPTION OF THE EMBODIMENT

In description of the present application, terms indicating orientation or location relationships such as "center", "up", "down", "left", "right", "vertical", "horizontal", "inside", and "outside" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present disclosure. In addition, terms "first" and "second" are only used to distinguish in terms of description and have no special meanings. Terms "first position" and "second position" are two different positions.

Unless otherwise specified and defined, terms "installed", "joined", "connected", and "fixed" should be understood in a broad sense, for example, it may be a fixed connection, or a detachable connection; it may be a mechanical connection or an electrical connection; it may be a directly connection or an indirectly connection through an intermediate media; and it may be an internal connection of two components or an interaction relationship between two components. For those skilled in the art, meanings of the above terms in the present disclosure can be understood according to situations.

Unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "above" or "up" the second feature includes that the first feature is directly above or obliquely above the second feature, or only indicate that a horizontal height of the first feature is greater than a horizontal height of the second feature. That the first feature is disposed "below", "under", or "underneath" of the second feature include that the first feature is directly below or obliquely below the second feature, or only indicate that the horizontal height of the first feature is less than the horizontal height of the second feature.

The technical solution of the present application is further explained by the attached drawings and the specific embodiments.

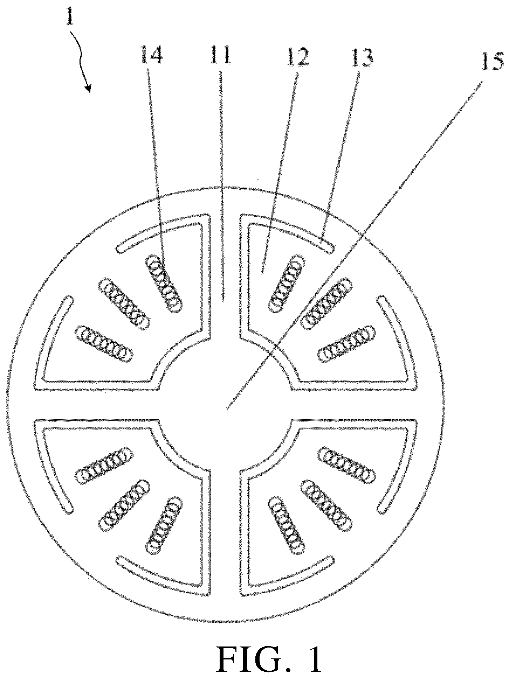

According to FIG. 1 to FIG. 3, a battery is provided in the present embodiment, the battery comprises a roll core 2, a pole 3 and a current collecting plate 1, where the roll core 2 is welded to the current collecting plate 1, and the pole 3 is electrically connected with the roll core 2 through the current collecting plate 1. The current collecting plate 1 comprises a main body part 11 and a welding part 12, the welding part 12 is bent relative to the main body part 11, and the current collecting plate 1 is welded with the roll core 2 through the welding part 12.

The current collecting plate 1 is provided with the welding part 12 bent relative to the main body part 11, and is welded with the roll core 2 by the welding part 12. Therefore, when an internal pressure of the battery is too high and an inner portion of the roll core 2 is pulled out, the roll core 2 pulls the welding part 12 to bend to deform, thereby avoiding a second short circuit caused by a break of a solder joint between the welding part 12 and the roll core 2. At the same time, the inner portion of the roll core 2 is pulled out to release the pressure, thus improving safety of the battery.

As shown in FIG. 1, when the inner portion of the roll core 2 is pulled out, the roll core 2 is generally pulled outwards from a center thereof, the main body part 11 is connected to the welding part 12 at a position away from a center of the main body part 11, and a free end of the welding part 12 extends towards the center of the main body part 11. Thus, an end of the welding part 12 close to the center of the main body part 11 is bent relative to the main body part 11, so that the welding part 12 can better adapt for pulling out the roll core 2.

For example, as shown in FIG. 1, in order to reduce a binding force of the main body part 11 on a single welding part 12 during pulling out the inner portion of the roll core 2, and to facilitate the roll core 2 to pull the welding part 12 to bend to deform during pulling out the inner portion of the roll core 2, a plurality of welding parts 12 are provided, and the plurality of the welding parts 12 are spaced from each other and around the center of the main body part 11. In the present embodiment, in consideration of an overall strength of the current collecting plate 1 and its application to a cylindrical battery, the current collecting plate 1 is configured in a plate shape, and is provided with four welding parts 12 with fan-ring shapes. A length of an arc where the welding part 12 connects with the main body part 11 ranges from 5mm to 8mm, and arcs of the four welding parts 12 close to the center of the main body part 11 are surrounded to define a central part 15.

As shown in FIG. 1, in the present embodiment, a solder joint between the welding part 12 and the roll core 2 is a linear solder joint 14, and a plurality of linear solder joints 14 are provided between each of the welding parts 12 and the roll core 2, so as to provide a firm connection between the welding part 12 and the roll core 2. In order to provide a uniform current conduct by the current collecting plate 1, the plurality of the linear solder joints 14 on the entire current collecting plate 1 are arranged at intervals around the central part 15. Of course, in other embodiments, the solder joint between the welding part 12 and the roll core 2 may not be linear, but may be arranged in a concentric circle with the center of the current collecting plate 1 as an arranging center. As long as the firm connection can be achieved and the uniform current conduct of the current collecting plate 1 is provided, the solder joint may be flexibly configured as required and not limited herein.

As shown in FIG. 1, a hollow groove 13 is provided between the welding part 12 and the main body part 11 when a heat generated during welding between the welding part 12 and the roll core 2, so as to release the heat generated during the welding and reduce an influence of a high temperature generated during the welding on other components. In addition, the hollow groove 13 is arranged around the welding part 12 to avoid an interference with the main body part 11 during the bending of the welding part 12. For example, a width of the hollow groove 13 ranges from 0.5 mm to 1.3 mm in consideration of the overall strength of the current collecting plate 1 and a heat dissipation effect of the hollow groove 13.

For example, as shown in FIG. 1 to FIG. 3, the battery further includes a housing 5, the current collecting plate 1 and the roll core 2 are arranged in the housing 5 to protect the roll core 2 after the welding, and an end of the pole 3 is welded to the central part 15 by a penetration welding to provide a current path. Due to a high thickness of the pole 3 in related technologies, the penetration welding between the pole 3 and the current collecting plate 1 is affected to a certain extent, resulting in unfirm welding between the pole 3 and the current collecting plate 1, and further separating the pole 3 from the current collecting plate 1. Therefore, another end of the pole 3 is provided with a recess part 31 for an avoidance for a laser head. As an example, a penetration layer is formed between an end face of the pole 3 close to the current collecting plate 1 and a bottom of the recess part 31, the laser head is extended into the recess part 31, and laser lights emitted from the laser head pass through the penetration layer, thereby connecting the pole 3 and the current collecting plate 1. By providing the recess part 31, a route for the laser lights penetrating pole 3 during the welding may be reduced, so that the welding between the pole 3 and the current collecting plate 1 may be more firmly.

In order to ensure a speed and a flow of a current transmitted from the roll core 2 to the pole 3 at the same time, an area S₁ of the central part 15 ranges from 60 mm² to 85 mm², and a total area S₂ of the welding parts 12 ranges from 650 mm² to 700 mm², a relationship between the area S₁ of the central part 15 and the total area S₂ of the welding parts 12 satisfies: 0.085 S₂ ≤ S₁ ≤ 0.13 S₂. In other embodiments, sizes of the central part 15 and the welding parts 12 may be flexibly configured as required and not limited herein.

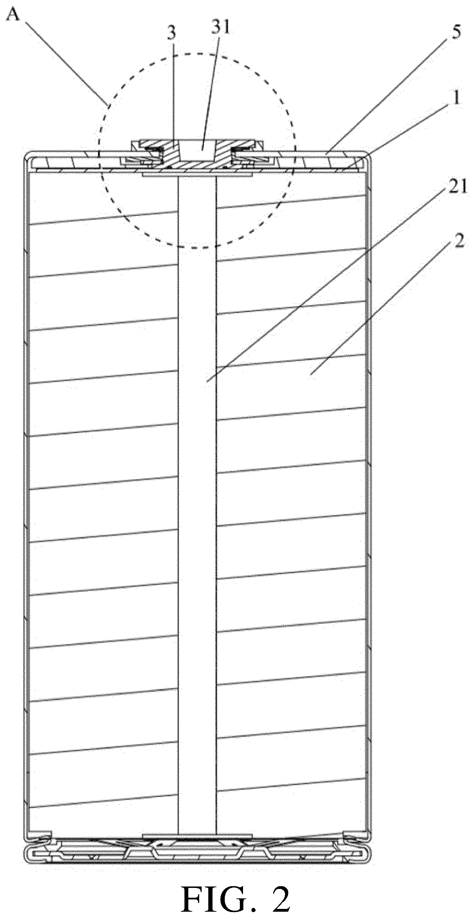

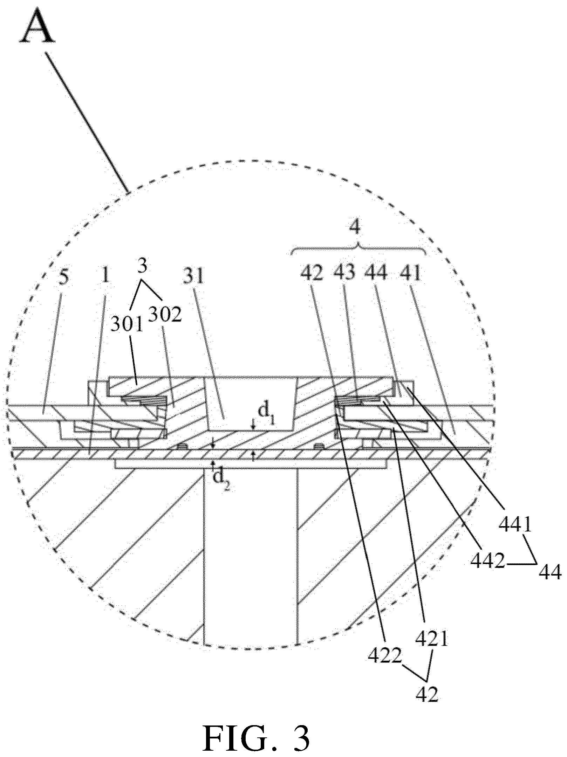

As shown in FIG. 2 and FIG. 3, in order to facilitate the laser head to extend into the recess part 31 of the pole 3, the recess part 31 in the present embodiment is a platform form with a round chamfer, and may guide the laser head to extend into the pole 3. For example, a cross section of the penetration layer is circular and a diameter of the cross section ranges from 3 mm to 8 mm, and a thickness d₁ of the penetration layer ranges from 0.8 mm to 1.5 mm, and a relationship between a thickness d₂ of the current collecting plate 1 and the thickness d₁ of the penetration layer satisfies with: 0.3 d₁ ≤ d₂ ≤ d₁, in consideration of a welding effect and a strength of the pole 3. Of course, in other embodiments, the shape and the diameter of the cross section of the recess part 31, the thicknesses of the penetration layer and the current collecting plate 1 may be flexibly configured as required and not limited herein.

For example, as shown in FIG. 2 and FIG. 3, in order to ensure a welding reliability, a receiving hole 21 is provided at the center of the roll core 2, and at the same time, a through hole is provided at a bottom of the housing 5, and the receiving hole 21 is configured to receive a supporting component. The supporting component may pass through the through hole and be arranged in the receiving hole 21. When the pole 3 is welded with the current collecting plate 1, the supporting component may press the current collecting plate 1 against the pole 3, so that the current collecting plate 1 and the end face of the pole 3 are closely attached. After welding, the supporting component can be pulled out from the bottom of the housing 5. For example, the support component is made of a hard metal material with a good thermal conductivity so that a heat generated in the welding of the collecting plate 1 and pole 3 can be released while the collecting plate 1 is pressed tightly. To avoid occupying too much internal space of the battery, a diameter of the receiving hole 21 ranges from 3mm to 8mm. Of course, in other embodiments, a shape and a size of the cross section of the receiving hole 21 may be flexibly configured as required and not limited herein.

For example, as shown in FIG. 2 and FIG. 3, the battery further includes an insulating component 4, and the insulating component 4 includes a first insulating component 41. The first insulating component 41 is sleeved on the pole 3, and arranged between the housing 5 and the current collecting plate 1 to isolate the current collecting plate 1 from the housing 5, avoiding a short circuit.

For example, in order to avoid an interference on the welding by bonding the first insulating component 41 with the current collecting plate 1 during the welding of the current collecting plate 1 and the pole 3, a gap is defined between the current collecting plate 1 and the first insulating component 41. Exemplarily, a height of the gap may range from 0.05 mm to 0.2 mm.

As shown in FIG. 2 and FIG. 3, in order to isolate the pole 3 from the housing 5 and avoid the short circuit, the insulating component 4 further includes a second insulating component 42, a third insulating component 43 and a fourth insulating component 44. The second insulating component 42, the third insulating component 43 and the fourth insulating component 44 are all sleeved on the pole 3 and may be connected with each other to isolate the pole 3 from the housing 5.

For example, the pole 3 includes a large end 301 and a small end 302 connected to each other, a stepped surface is defined between the large end 301 and the small end 302, the large end 301 is arranged above the small end 302, and the large end 301 extends out of the housing 5. The second insulating component 42 includes a first part 421 and a second part 422 connected to each other, the first part 421 and the second part 422 are both cylindrical structures with through holes. The first part 421 and the second part 422 are sleeved on the small end portion 302 of the pole 3. The second part 422 is arranged between the pole 3 and the housing 5, the second part 422 is arranged between a hole wall of the hole opened in the housing 5 for the pole 3 to passage and an outer side wall of the small end 302 of the pole 3. The first part 421 is extended into the housing 5, and the first part 421 is closely attached to an inner side wall of the housing 5, so as to provide a stable fixation of the second insulating component 42. The fourth insulating component 44 includes a third part 441 and a fourth part 442 connected to each other, and the third part 441 and the fourth part 442 are cylindrical structures with through holes. The third part 441 is sleeved on the large end 301 of the pole 3, and the fourth part 442 extends between the stepped surface of the pole 3 and an outer wall of the housing 5, the fourth part 442 is arranged between a side face of the large end 301 close to the small end 302 and the outer wall of the housing 5. The third insulating component 43 is arranged between the second insulating component 42 and the fourth insulating component 44, and is connected to the second insulating component 42 and the fourth insulating component 44 respectively. Of course, in other embodiments, the number of the insulating component 4 and a specific manner of connecting may be flexibly configured as required and not limited herein.

In the present embodiment, a process of the battery is as follows:
Firstly, the roll core 2 is welded to the welding part 12 of the current collecting plate 1 by penetration welding. The solder joints between the roll core 2 and the welding part 12 are a plurality of linear solder j oints 14, and the plurality of the linear solder joints 14 are arranged at intervals around the center of the current collecting plate 1. During this process, the heat generated in the welding can be released by the hollow groove 13.
Secondly, after welding the core 2 with the current collecting plate 1, the roll core 2 is arranged in the housing 5 to protect the roll core 2, and the pole 3 and the current collecting plate 1 are connected by the penetration welding to provide the current path.

For example, by providing the recess part 31, the laser head can extend into the recess part 31 on the pole 3 and the laser lights emitted from the laser head can pass through the penetration layer thereby connecting the pole 3 and the current collecting plate 1. In this process, the support component can pass through the through hole at the bottom of the housing 5 and be arranged in the receiving hole 21 of the roll core 2, and the current collecting plate 1 is pressed against the pole 3, so that the current collecting plate 1 and the end face of the pole 3 are closely attached, and the heat generated during the welding can be released. After the welding, the support component can be pulled out from the through hole at the bottom of the housing 5.

## Claims

1. A current collecting plate, wherein the current collecting plate is configured to connect with a roll core (2) of a battery, the current collecting plate (1) comprises a main body part (11) and a welding part (12), and the current collecting plate (1) is welded with the roll core (2) through the welding part (12);
wherein a plurality of linear solder joints (14) are provided between the roll core (2) and the welding part (12);
the main body part (11) is located at a center of the current collecting plate (1), the main body part (11) is connected to the welding part (12) at a position radially outward from its center, and a free end of the welding part (12) is configured to extend towards the center of the main body part (11); and
the welding part (12) is configured to be bent to deform when the welding part (12) is pulled by the roll core (2), such that the free end of the welding part (12) is in a bent state relative to the main body part (11).

2. The current collecting plate according to claim 1, wherein a plurality of welding parts (12) are provided, and the plurality of welding parts (12) are arranged at intervals and around the center of the main body part (11).

3. The current collecting plate according to claim 1 or 2, wherein a hollow groove (13) is provided between the welding part (12) and the main body part (11).

4. A battery, comprising a roll core (2), a pole (3), and the current collecting plate (1) according to any one of claim 1 to claim 3, wherein the roll core (2) is welded to the current collecting plate (1), and the pole (3) is electrically connected with the roll core (2) through the current collecting plate (1);
wherein the battery further comprises a housing (5), the current collecting plate (1) and the roll core (2) are disposed in the housing (5);
wherein the battery further comprises an insulating component (4), and the insulating component (4) comprises a second insulating component (42) sleeved on the pole (3);
the second insulating component (42) comprises a first part (421) and a second part (422) connected to each other, the first part (421) extends into the housing (5) and is attached to an inner side wall of the housing (5), and the second part (422) is disposed between the housing (5) and the pole (3); and
each of the first part (421) and the second part (422) is a cylindrical structure having a through hole.

5. The battery according to claim 4, wherein the main body part (11) comprises a central part (15), a first end of the pole (3) is welded to the central part (15), and a second end of the pole (3) is provided with a recess part (31) configured for an avoidance for a laser head.

6. The battery according to claim 5, wherein an area S₁ of the central part (15) ranges from 60 mm² to 85 mm², and a total area S₂ of the welding part (12) ranges from 650 mm² to 700 mm²;
a relationship between the area S₁ of the central part (15) and the total area S₂ of the welding part (12) satisfies: 0.085 S₂ ≤ S₁ ≤ 0.13 S₂.

7. The battery according to claim 5, wherein a penetration layer is provided between an end face of the pole (3) close to the current collecting plate (1) and an inner bottom surface of the recess part (31), a cross section of the penetration layer is circular and a diameter of the cross section ranges from 3mm to 8mm, and a thickness d₁ of the penetration layer ranges from 0.8 mm to 1.5 mm;
wherein a relationship between a thickness d₂ of the current collecting plate (1) and the thickness di of the penetration layer satisfies: 0.3 d₁ ≤ d₂ ≤ d₁.

8. The battery according to any one of claim 4 to claim 7, wherein a center of the roll core (2) is provided with a receiving hole (21), the receiving hole (21) is configured to receive a support component, and the support component is configured to press the current collecting plate (1) against the pole (3).

9. The battery according to any one of claim 4 to claim 7, wherein the insulating component (4) comprises a first insulating component (41), and the first insulating component (41) is sleeved on the pole (3) and arranged between the housing (5) and the current collecting plate (1).

10. The battery according to claim 9, wherein a gap is defined between the current collecting plate (1) and the first insulating component (41).

## Patentansprüche

1. Stromabnehmerplatte, wobei die Stromabnehmerplatte so ausgebildet ist, dass sie mit einem Rollenkern (2) einer Batterie verbunden werden kann, wobei die Stromabnehmerplatte (1) einen Hauptkörperabschnitt (11) und einen Schweißabschnitt (12) umfasst und die Stromabnehmerplatte (1) über den Schweißabschnitt (12) mit dem Rollenkern (2) verschweißt ist;
wobei zwischen dem Rollenkern (2) und dem Schweißabschnitt (12) mehrere lineare Lötstellen (14) vorgesehen sind;
wobei sich der Hauptkörperabschnitt (11) in der Mitte der Stromabnehmerplatte (1) befindet, der Hauptkörperabschnitt (11) an einer Stelle radial außerhalb seiner Mitte mit dem Schweißabschnitt (12) verbunden ist und ein freies Ende des Schweißabschnitts (12) so ausgebildet ist, dass es sich in Richtung der Mitte des Hauptkörperabschnitts (11) erstreckt; und
das Schweißteil (12) ist so ausgebildet, dass es sich verbiegt, wenn das Schweißteil (12) vom Rollenkern (2) gezogen wird, sodass sich das freie Ende des Schweißteils (12) relativ zum Hauptkörperteil (11) in einem gebogenen Zustand befindet.

2. Stromabnehmerplatte nach Anspruch 1, wobei mehrere Schweißteile (12) vorgesehen sind und die mehreren Schweißteile (12) in Abständen und um die Mitte des Hauptkörperteils (11) herum angeordnet sind.

3. Stromabnehmerplatte nach Anspruch 1 oder 2, wobei zwischen dem Schweißteil (12) und dem Hauptkörperteil (11) vorgesehen ist.

4. Eine Batterie, umfassend einen Wickelkern (2), einen Pol (3) und die Stromabnehmerplatte (1) gemäß einem der Ansprüche 1 bis 3, wobei der Wickelkern (2) mit der Stromabnehmerplatte (1) verschweißt ist und der Pol (3) über die Stromabnehmerplatte (1) elektrisch mit dem Wickelkern (2) verbunden ist;
wobei die Batterie ferner ein Gehäuse (5) umfasst, wobei die Stromabnehmerplatte (1) und der Rollkern (2) in dem Gehäuse (5) angeordnet sind;
wobei die Batterie ferner ein Isolierelement (4) umfasst, und das Isolierelement (4) ein zweites Isolierelement (42) umfasst, das auf den Pol (3) aufgeschoben ist;
wobei das zweite Isolierteil (42) einen ersten Teil (421) und einen zweiten Teil (422) umfasst, die miteinander verbunden sind, wobei sich der erste Teil (421) in das Gehäuse (5) erstreckt und an einer inneren Seitenwand des Gehäuses (5) befestigt ist, und wobei der zweite Teil (422) zwischen dem Gehäuse (5) und dem Pol (3) angeordnet ist; und
sowohl der erste Teil (421) als auch der zweite Teil (422) sind zylindrische Strukturen mit einer Durchgangsbohrung.

5. Batterie nach Anspruch 4, wobei der Hauptkörperteil (11) einen Mittelteil (15) umfasst, ein erstes Ende des Pols (3) mit dem Mittelteil (15) verschweißt ist und ein zweites Ende des Pols (3) mit einem Aussparungsteil (31) versehen ist, das zur Ausweichung für einen Laserkopf ausgebildet ist.

6. Batterie nach Anspruch 5, wobei eine Fläche S1 des Mittelteils (15) zwischen 60 mm² und 85 mm² liegt und eine Gesamtfläche S2 des Schweißteils (12) zwischen 650 mm² und 700 mm² liegt;
wobei ein Verhältnis zwischen der Fläche S1 des Mittelteils (15) und der Gesamtfläche S2 des Schweißteils (12) die folgende Bedingung erfüllt: 0,085 S2 ≤ S1 ≤ 0,13 S2.

7. Die Batterie nach Anspruch 5, wobei zwischen einer der Stromabnehmerplatte (1) benachbarten Stirnfläche des Pols (3) und einer inneren Bodenfläche des Aussparungsteils (31) eine Durchdringungsschicht vorgesehen ist, deren Querschnitt kreisförmig ist und deren Durchmesser im Bereich von 3 mm bis 8 mm liegt, und wobei die Dicke d1 der Durchdringungsschicht im Bereich von 0,8 mm bis 1,5 mm liegt;
wobei ein Verhältnis zwischen einer Dicke d2 der Stromabzugsplatte (1) und der Dicke d1 der Durchdringungsschicht die folgende Bedingung erfüllt: 0,3 d1 ≤ d2 ≤ d1.

8. Batterie nach einem der Ansprüche 4 bis 7, wobei ein Mittelpunkt des Rollenkerns (2) mit einer Aufnahmebohrung (21) versehen ist, die Aufnahmebohrung (21) zur Aufnahme eines Stützelements ausgebildet ist und das Stützelement dazu ausgebildet ist, die Stromabzugsplatte (1) gegen den Pol (3) zu drücken.

9. Die Batterie gemäß einem der Ansprüche 4 bis 7, wobei das Isolierelement (4) ein erstes Isolierelement (41) umfasst und das erste Isolierelement (41) auf den Pol (3) aufgeschoben und zwischen dem Gehäuse (5) und der Stromabzugsplatte (1) angeordnet ist.

10. Batterie nach Anspruch 9, wobei zwischen der Stromabnehmerplatte (1) und dem ersten Isolierelement (41) ein Spalt gebildet ist.

## Revendications

1. Plaque de collecte de courant, **caractérisée en ce que** ladite plaque de collecte de courant est configurée pour être reliée à un noyau de rouleau (2) d'une batterie, la plaque de collecte de courant (1) comprend une partie de corps principal (11) et une partie de soudure (12), et la plaque de collecte de courant (1) est soudée au noyau de rouleau (2) par l'intermédiaire de la partie de soudure (12) ;
dans laquelle une pluralité de joints de soudure linéaires (14) sont prévus entre le noyau de rouleau (2) et la partie de soudure (12) ;
la partie de corps principal (11) est située au centre de la plaque collectrice de courant (1), la partie de corps principal (11) est reliée à la partie de soudure (12) en un emplacement situé radialement vers l'extérieur par rapport à son centre, et une extrémité libre de la partie de soudure (12) est agencée pour s'étendre vers le centre de la partie de corps principal (11) ; et
la partie de soudure (12) est configurée pour se courber et se déformer lorsque la partie de soudure (12) est tirée par le noyau de rouleau (2), de telle sorte que l'extrémité libre de la partie de soudure (12) se trouve dans un état courbé par rapport à la partie de corps principal (11).

2. Plaque collectrice de courant selon la revendication 1, dans laquelle une pluralité de parties de soudure (12) sont prévues, et ladite pluralité de parties de soudure (12) est disposée à intervalles réguliers et autour du centre de la partie de corps principal (11).

3. Plaque collectrice de courant selon la revendication 1 ou 2, dans laquelle une rainure creuse (13) est prévue entre la partie de soudure (12) et la partie de corps principal (11).

4. Batterie comprenant un noyau d'enroulement (2), un pôle (3) et la plaque de collecte de courant (1) selon l'une quelconque des revendications 1 à 3, dans laquelle le noyau d'enroulement (2) est soudé à la plaque de collecte de courant (1), et le pôle (3) est connecté électriquement au noyau d'enroulement (2) par l'intermédiaire de la plaque de collecte de courant (1) ;
dans laquelle la batterie comprend en outre un boîtier (5), la plaque de collecte de courant (1) et le noyau enroulé (2) étant disposés dans le boîtier (5) ;
dans laquelle la batterie comprend en outre un composant isolant (4), et le composant isolant (4) comprend un deuxième composant isolant (42) emmanché sur la borne (3) ;
le deuxième composant isolant (42) comprend une première partie (421) et une deuxième partie (422) reliées l'une à l'autre, la première partie (421) s'étendant à l'intérieur du boîtier (5) et étant fixée à une paroi latérale intérieure du boîtier (5), et la deuxième partie (422) étant disposée entre le boîtier (5) et le pôle (3) ; et
chacune des première partie (421) et deuxième partie (422) est une structure cylindrique comportant un trou traversant.

5. Batterie selon la revendication 4, dans laquelle la partie de corps principal (11) comprend une partie centrale (15), une première extrémité de la tige (3) est soudée à la partie centrale (15), et une seconde extrémité de la tige (3) est pourvue d'un évidement (31) configuré pour permettre le passage d'une tête laser.

6. Batterie selon la revendication 5, dans laquelle la surface S1 de la partie centrale (15) est comprise entre 60 mm² et 85 mm², et la surface totale S2 de la partie soudée (12) est comprise entre 650 mm² et 700 mm² ;
le rapport entre la surface S1 de la partie centrale (15) et la surface totale S2 de la partie de soudure (12) satisfait à la relation suivante : 0.085 S2 ≤ S1 ≤ 0.13 S2.

7. La batterie selon la revendication 5, dans laquelle une couche de pénétration est prévue entre une face d'extrémité du pôle (3) proche de la plaque collectrice de courant (1) et une surface inférieure interne de la partie en retrait (31), la section transversale de la couche de pénétration est circulaire et le diamètre de cette section transversale est compris entre 3 mm et 8 mm, et l'épaisseur d1 de la couche de pénétration est comprise entre 0.8 mm et 1.5 mm ;
dans laquelle la relation entre l'épaisseur d2 de la plaque collectrice de courant (1) et l'épaisseur d1 de la couche de pénétration satisfait à la condition suivante : 0.3 d1 ≤ d2 ≤ d1.

8. Batterie selon l'une quelconque des revendications 4 à 7, dans laquelle le centre du noyau de rouleau (2) est muni d'un trou de réception (21), le trou de réception (21) est configuré pour recevoir un composant de support, et le composant de support est configuré pour presser la plaque collectrice de courant (1) contre le pôle (3).

9. Batterie selon l'une quelconque des revendications 4 à 7, dans laquelle l'élément isolant (4) comprend un premier élément isolant (41), et le premier élément isolant (41) est emmanché sur le pôle (3) et disposé entre le boîtier (5) et la plaque collectrice de courant (1).

10. Batterie selon la revendication 9, dans laquelle un espace est défini entre la plaque de collecte de courant (1) et le premier composant isolant (41).
